# EUROPEAN PATENT APPLICATION

(11) **EP 4 811 190 A1**
(43) Date of publication of application: **23.09.2026**
(21) Application number: 26161911.8
(22) Date of filing: 03.03.2026
(51) Int. Cl.: G06F 21/50, G06Q 10/20, H04L 9/00

(54) **INFORMATION PROCESSING APPARATUS, PLANT SYSTEM, RECORDING METHOD, RECORDING PROGRAM, INFORMATION PROCESSING SYSTEM**

(30) Priority: 18.03.2025 JP 2025043869
(71) Applicant: Yokogawa Electric Corporation, Musashino-shi, Tokyo 180-8750 (JP)
(72) Inventor: FUNAKI, Yo, Musashino-shi, Tokyo, 180-8750 (JP)
(74) Representative: Winter, Brandl - Partnerschaft mbB

(57) **Abstract**

An information processing apparatus (2,3,4) includes a processor (17,46). The processor (17,46) is configured to detect an incident that has occurred, generate history information on the incident, and record the generated history information in a blockchain (50).

## Description

### BACKGROUND OF THE INVENTION

### 1. Field of the Invention

The present invention is related to an information processing apparatus, a plant system, a recording method, a recording program, and an information processing system.

### 2. Description of the Related Art

For example, in a plant system of a production facility or the like, a plant monitoring apparatus that monitors plant operation of a worker in a plant or an operating state of a plant device is known. The plant monitoring apparatus monitors the operating state by a process signal that is received from a measurement device, such as a flow meter or a thermometer, and controls operation of the plant by operating a field device, such as a valve or a pump, by inputting the plant operation of the worker.
Patent Literature 1: Japanese Laid-open Patent Publication No. 2014-32633
Patent Literature 2: U.S. Patent Application Publication No. 2023/0135714

However, in a conventional plant system, a series of incidents that occur in information processing apparatuses, such as the plant device and the field device, in the plant, is not centrally managed, so that it is difficult to see a big picture of correlations of all of the incidents and analyze the correlations.

In addition, even when security measures, such as access restrictions, are taken, records in the information processing apparatus may be falsified if information, such as a user ID or a password, for access authentication is leaked, for example.

Therefore, there is a need for an information processing apparatus that is able to centrally manage a history of incidents that have occurred in each of information processing apparatuses in a plant system and enhance security.

According to one aspect, an object is to provide an information processing apparatus that is able to centrally manage a history of incidents that have occurred and enhance security.

### SUMMARY OF THE INVENTION

According to an aspect of an embodiment, an information processing apparatus (2,3,4) includes a processor (17,46). The processor (17,46) is configured to detect an incident that has occurred, generate history information on the detected incident, and record the generated history information in a blockchain (50).

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating an example of a plant system of a first embodiment;
FIG. 2 is a block diagram illustrating an example of an engineering terminal (operator terminal);
FIG. 3 is a block diagram illustrating an example of a controller;
FIG. 4 is an explanatory diagram illustrating an example of history information;
FIG. 5 is a flowchart illustrating an example of processing operation performed by a CPU in relation to first pre-processing;
FIG. 6 is a flowchart illustrating an example of processing operation performed by the CPU in relation to a recording process;
FIG. 7 is a schematic diagram illustrating an example of operation of recording the history information in a blockchain;
FIG. 8 is a block diagram illustrating an example of a plant system group of a second embodiment;
FIG. 9 is an explanatory diagram illustrating an example of history information;
FIG. 10 is a flowchart illustrating an example of processing operation performed by a CPU in relation to second pre-processing;
FIG. 11 is a schematic diagram illustrating an example of operation of recording the history information in a blockchain; and
FIG. 12 is an explanatory diagram illustrating an example of an information processing apparatus that executes a recording program.

### DETAILED DESCRIPTION OF THE PREFERRED EMBODIMENTS

### Comparison example

For example, a plant system of a production facility or the like includes an engineering terminal, an operator terminal, and a controller, and the engineering terminal, the operator terminal, and the controller are connected to one another by using a network.

The engineering terminal is, for example, an information processing apparatus, such as a personal computer, that is used by an engineer. The operator terminal is, for example, an information processing apparatus, such as a personal computer, that is used by an operator who monitors a state of a manufacturing device or a controller. The controller is an information processing apparatus, such as a control device, that monitors or controls a monitoring target device or a control target device of a plant device, such as a field device including a manufacturing device or a sensor device, in the plant system.

The information processing apparatuses, such as the engineering terminal, the operator terminal, and the controller, have functions to record, as histories, incidents that have occurred in the subject apparatuses. The histories in the engineering terminal and the operator terminal include, for example, histories of different incident types, such as an operation history and a security audit history. Further, the history in the controller includes, for example, histories of different incident types, such as a change operation history and an alarm issuance history of a manufacturing device or a field device as a monitoring target or a control target.

Furthermore, an administrator of the plant system is able to manage a state of each of the information processing apparatuses in the plant system by referring to the history that is recorded in each of the information processing apparatuses. In the plant system of the comparison example, when an incident that is detected by each of the information processing apparatuses is to be recorded as a history, the incident is generally recorded in each of the information processing apparatuses in a unique format that differs for each incident type.

However, in the plant system of the comparison example, a series of incidents that have occurred in a plant is not centrally managed, so that it is difficult to see a big picture of correlations of all of the incidents and analyze the correlations.

In addition, even when security measures, such as access restrictions, are taken, records in the information processing apparatuses may be falsified if information, such as a user ID or a password, for access authentication is leaked, for example.

Therefore, there is a need for an information processing apparatus that is able to centrally manage a history of incidents that have occurred in each of information processing apparatuses in a plant system and enhance security.

Embodiments of an information processing apparatus or the like disclosed in the present application will be described in detail below based on the drawings. Meanwhile, the disclosed technology is not limited by the embodiments below. In addition, each of the embodiments described below may be modified as long as no contradiction is derived.

### First embodiment

### System configuration

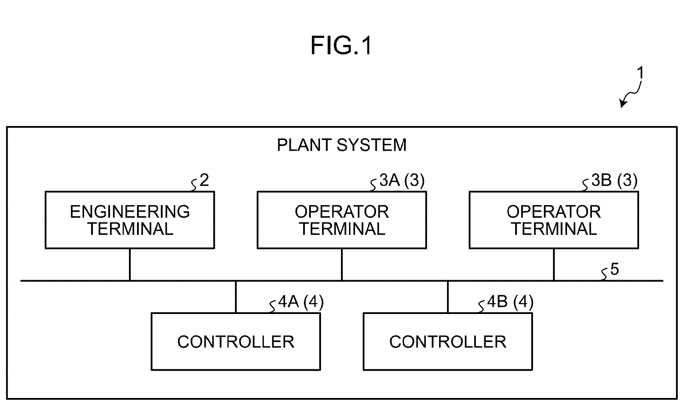

FIG. 1 is a block diagram illustrating an example of a plant system 1 of a first embodiment. The plant system 1 illustrated in FIG. 1 includes an engineering terminal 2, an operator terminal 3, a controller 4, and a network 5. The engineering terminal 2 is, for example, an information processing apparatus of an engineer who implements a control algorithm of hardware, software, or the like in the controller 4. The operator terminal 3 is, for example, an information processing apparatus, such as a personal computer, that is used by an operator who monitors a state of the controller 4 and that is used to input a command, a setting value, or the like to the controller 4.

The controller 4 is an information processing apparatus, such as a control device, that monitors or controls a plant device, such as a field device including a manufacturing device or a sensor device, as a monitoring target or a control target in the plant system 1. The controller 4 may be, for example, a control device in a field device, such as a pressure transmitter, a temperature transmitter, a multivariable transmitter, or a flow meter. The controller 4 is defined by the engineering terminal 2, executes a control algorithm that is downloaded onto the controller 4, and controls a production facility in a plant, for example. Meanwhile, the production facility is, for example, a facility, such as a tank, a sensor device, or a valve, when the plant is a beer manufacturing plant.

The information processing apparatuses, such as the engineering terminal 2, the operator terminal 3, and the controller 4, in the plant system 1 are synchronized to the same time. Meanwhile, for the sake of simplicity of explanation, it is assumed that the plant system 1 illustrated in FIG. 1 includes the single engineering terminal 2, two operator terminals 3A and 3B (3), and two controllers 4A and 4B (4).

The network 5 is a wired or wireless communication network for communication with the engineering terminal 2, the operator terminal 3, and the controller 4. The plant system 1 is a system that records history information on incidents that are detected in the information processing apparatuses, such as the engineering terminal 2, the operator terminal 3, and the controller 4, in the plant system 1 in a blockchain 50 that is shared by all of the information processing apparatuses in the plant system 1.

The blockchain 50 is, for example, a blockchain of a distributed ledger type using Smart Contract, that shares history information on incidents detected by each of the information processing apparatuses in the plant system 1 with the information processing apparatuses in the plant system 1.

### Content and history of incident

A history of incidents detected by each of the information processing apparatuses in the plant system 1 will be described below. The engineering terminal 2 implements a control algorithm in the controller 4 by using a setting tool that is used for setting hardware and software of the controller 4 and a construction tool for constructing the control algorithm that works on the controller 4. The control algorithm is, for example, in the case of the plant system, such as a beer manufacturing factory, a control algorithm for performing procedures, such as preparation, mashing, filtration, boiling, aging, and fermentation, for manufacturing beer. The history of incidents in the engineering terminal 2 includes, for example, histories of different incident types, such as an OS event history, a security audit history, and an engineering operation history.

The OS event history is, for example, an event history of an OS that is used by the engineering terminal 2. The security audit history is, for example, a history related to security audit, such as login, logout, or access to a resource including a file or the like, by a user who uses the engineering terminal 2. The engineering operation history is a history of operation on the engineering terminal 2. The engineering operation history includes an operation history using a setting tool and an operation history using a construction tool. The operation history using the setting tool includes, for example, a setting change of the controller 4 due to update of a network address, a user definition, a user access right definition, security setting, software, or the like, and operation history, such as stop or restart of the controller 4. The operation history using the construction tool includes a change history, such as addition, deletion, or change, of a definition in the control algorithm. Further, the operation history using the construction tool includes an operation history, such as download of the control algorithm onto the controller 4, and stop, activation, pause, or un-pause of operation of the control algorithm that works on the controller 4.

The history of incidents in the operator terminal 3 includes, for example, histories of different incident types, such as an OS event history, a security audit history, and an operator operation history. The OS event history is, for example, an event history of an OS that is used by the operator terminal 3. The security audit history is, for example, a history related to security audit, such as login, logout, or access to a resource including a file or the like, by a user who uses the operator terminal 3. Further, the security audit history includes a monitoring screen use history for monitoring the plant. Furthermore, the operator operation history is, for example, a history of operation, such as change of a setting value of the controller 4, on the plant by the operator.

The history of incidents in the controller 4 includes, for example, histories of different incident types, such as an OS event history, a security audit history, and a controller operation history. The OS event history is, for example, an event history of an OS that is used by the controller 4. The security audit history is, for example, a history related to security audit, such as login, logout, or access to a resource including a file or the like, by a user who accesses the controller 4.

The controller operation history includes, for example, histories of alarm issuance for giving a notice of a hardware failure or the like in the controller 4, alarm issuance for giving a notice of a process failure detected by a control application that runs on the controller 4, and an event of operation from the operator terminal 3. Further, the controller operation history includes, for example, a change history of an operating state, such as start, stop, pause, or un-pause, of the controller 4. Furthermore, the controller operation history includes an issuance history of an alarm for notifying the operator terminal 3 of abnormality detected by hardware in the controller 4, an alarm for notifying the operator terminal 3 of abnormality detected by software in the controller 4, or the like. Moreover, the controller operation history includes an issuance history of an alarm for notifying the operator terminal 3 of abnormality of a state of the plant or abnormality of temperature, pressure, or the like in the plant, which is detected by the control algorithm that is executed by the controller 4.

### Configuration of engineering terminal 2 and operator terminal 3

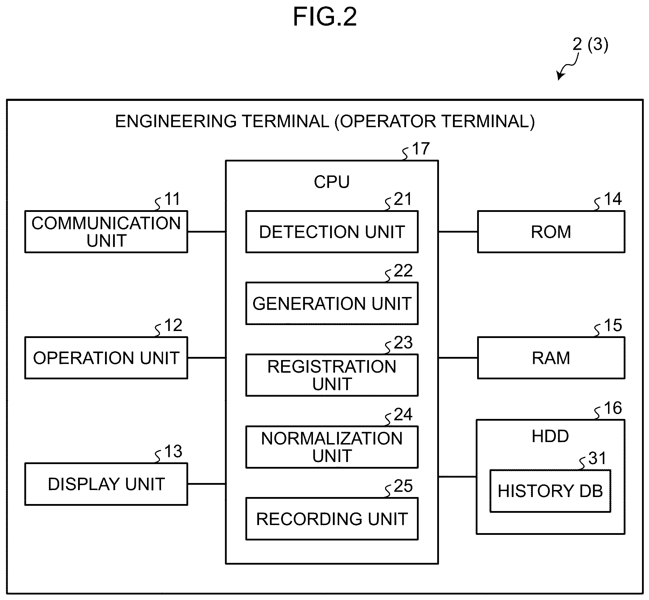

FIG. 2 is a block diagram illustrating an example of the engineering terminal 2 (the operator terminal 3). Meanwhile, for the sake of simplicity of explanation, an example of the configuration of the engineering terminal 2 will be described; however, the operator terminal 3 has approximately the same configuration, and therefore, the same reference symbols are assigned and explanation of the same components and operation will be omitted.

The engineering terminal 2 illustrated in FIG. 2 includes a communication unit 11, an operation unit 12, a display unit 13, a Read Only Memory (ROM) 14, a Random Access Memory (RAM)15, a Hard Disk Drive (HDD) 16, and a Central Processing Unit (CPU) 17. The communication unit 11 is a communication interface that is connected to the network 5 in a wired or wireless manner. The operation unit 12 is an input interface for inputting information, such as various kinds of commands. The display unit 13 is an output interface for outputting various kinds of information on a display. The ROM 14 is a non-volatile memory for storing various kinds of programs, various kinds of information, or the like. The RAM 15 is a volatile memory for storing various kinds of information. The HDD 16 is a storage area for storing information, such as various kinds of data. The HDD 16 includes a history Data Base (DB) 31. The history DB 31 includes a DB in a different format for each incident type and stores history information for each incident type in the DB corresponding to the incident type. The different format for each incident type is a first format. Meanwhile, the history DB 31 in the operator terminal 3 includes a DB in a different format for each incident type, and stores history information for each incident type in the DB corresponding to the format.

The CPU 17 controls the entire engineering terminal 2. The CPU 17 includes, as functions, a detection unit 21, a generation unit 22, a registration unit 23, a normalization unit 24, and a recording unit 25. The detection unit 21 detects an incident that has occurred inside or outside the engineering terminal 2 that is a subject apparatus. The generation unit 22 generates history information in a different format for each incident type, based on a detection result of the incident that has occurred. The registration unit 23 registers the generated history information in a DB in a certain format corresponding to the incident type in the history DB 31. The normalization unit 24 normalizes the history information in a different format for each incident type, which is registered in the history DB 31, to a predetermined format. Meanwhile, the predetermined format is a second format as a common format that is used for blocks of the blockchain 50.

The recording unit 25 converts unrecorded history information that is normalized to the predetermined format to a block for the blockchain, and records the converted history information in the blockchain 50. Specifically, the recording unit 25 verifies the content of the normalized history information, and converts the history information to a block of history information for the block chain in accordance with a verification result indicating that the validity of the history information is proved. The recording unit 25 calculates a hash value of the converted block of the history information, and confirms validity of the block of the history information based on the calculated hash value. Further, after confirming the validity of the block, the recording unit 25 records the block of the history information in the blockchain 50.

Furthermore, the registration unit 23 of the operator terminal 3 registers the history information in a format corresponding to the incident type in a DB corresponding to the incident type in the history DB 31 in the operator terminal 3. The normalization unit 24 of the operator terminal 3 normalizes the history information that is in a different format for each incident type and that is registered in the history DB 31 to a predetermined format.

### Configuration of controller 4

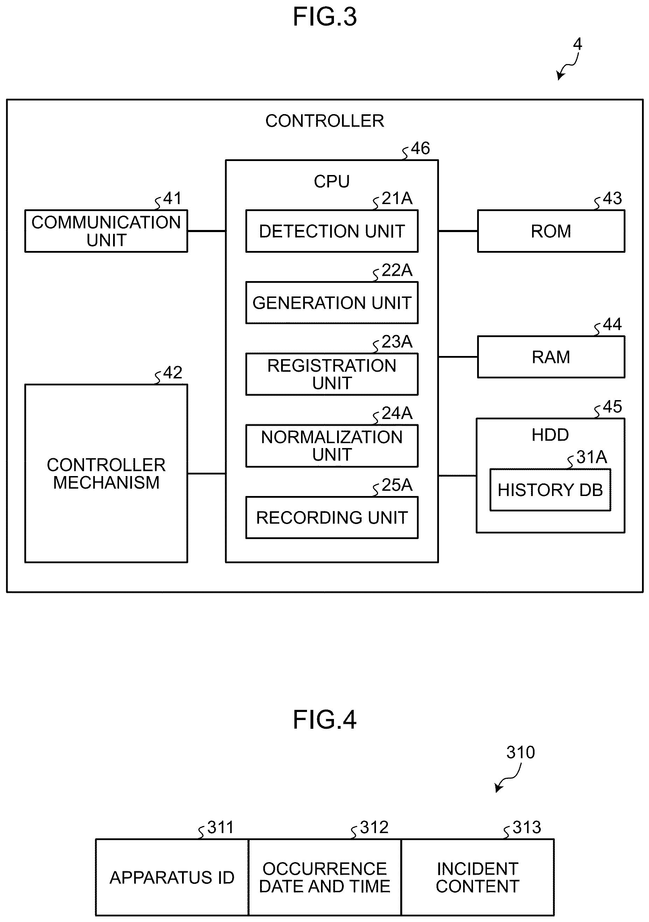

FIG. 3 is a block diagram illustrating an example of the controller 4. The controller 4 illustrated in FIG. 3 includes a communication unit 41, a controller mechanism 42, a ROM 43, a RAM 44, an HDD 45, and a CPU 46. The communication unit 41 is a communication interface that is connected to the network 5 in a wired or wireless manner. The ROM 43 is a non-volatile memory for storing various kinds of programs, various kinds of information, or the like. The RAM 44 is a volatile memory for storing various kinds of information. The HDD 45 is a storage area for storing information, such as various kinds of data. The HDD 45 includes, for example, a history DB 31A. The history DB 31A includes a DB in a different format for each incident type and stores history information for each incident type in the DB corresponding to the incident type.

The CPU 46 controls the entire controller 4. The CPU 46 includes, as functions, a detection unit 21A, a generation unit 22A, a registration unit 23A, a normalization unit 24A, and a recording unit 25A. The detection unit 21A detects an incident that has occurred inside or outside the controller 4 that is a subject apparatus. The generation unit 22A generates history information in a different format for each incident type, based on a detection result of the incident that has occurred. The registration unit 23A registers the generated history information in a DB in a certain format corresponding to the incident type in the history DB 31A. The normalization unit 24A normalizes the history information in a different format for each incident type, which is registered in the history DB 31A, to a predetermined format.

The recording unit 25A converts the history information that is normalized to the predetermined format into a block for the blockchain, and records the converted block of the history information in the blockchain 50. Specifically, the recording unit 25A verifies a content of the normalized history information, and converts history information to a block of history information for the blockchain in accordance with a verification result indicating that validity of the history information is proved. The recording unit 25A calculates a hash value of the converted block of the history information, and confirms validity of the block of the history information based on the calculated hash value. Further, after confirming the validity of the block, the recording unit 25A records the block of the history information in the blockchain 50.

### History information

FIG. 4 is an explanatory diagram illustrating an example of history information 310. The history information 310 illustrated in FIG. 4 is information on a history of incidents that have occurred. The history information 310 includes, for each apparatus ID 311, occurrence date and time 312 and an incident content 313. The apparatus ID 311 is identification information for identifying an information processing apparatus that has detected an incident that has occurred. The information processing apparatus that detects an incident that has occurred may be, for example, a component device, such as the engineering terminal 2, the operator terminal 3, or the controller 4, in the plant system 1.

The occurrence date and time 312 is date and time at which the detection unit 21 (21A) detects an incident that has occurred. The incident content 313 is a specific content of an incident, such as a content of operation using the operator terminal 3 or the operation unit 12 of the engineering terminal 2, or a content of incident, such as issuance of alarm, that is detected by the controller 4, for example.

### Operation of plant system 1

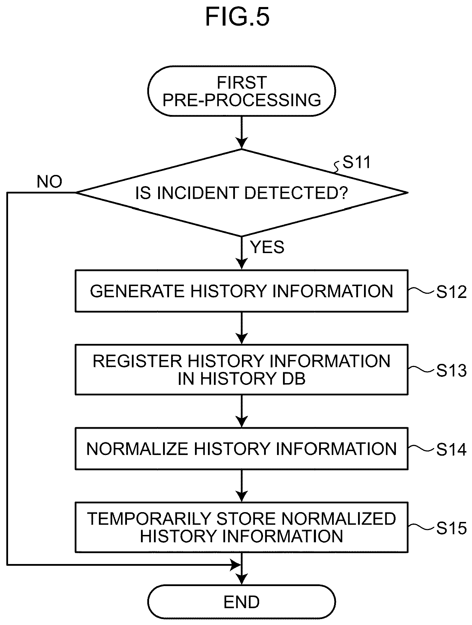

Operation of the plant system 1 of the first embodiment will be described below. FIG. 5 is a flowchart illustrating an example of processing operation of the CPU 17 related to first pre-processing. The first pre-processing is pre-processing for recording the history information 310 related to an incident in the blockchain 50 when occurrence of the incident is detected. Meanwhile, for the sake of simplicity of explanation, the first pre-processing performed by the CPU 17 in the operator terminal 3 will be described as an example, but the same processing is performed by the CPU 17 of the engineering terminal 2 or the CPU 46 of the controller 4 when occurrence of an incident is detected.

As illustrated in FIG. 5, the detection unit 21 in the CPU 17 in the operator terminal 3 determines whether or not an incident is detected (Step S11). Meanwhile, the incident is an incident that has occurred inside or outside the operator terminal 3. The generation unit 22 in the CPU 17, when detecting the incident (Step S11: Yes), generates the history information 310 in a certain format corresponding to the incident type based on an incident detection result (Step S12). Meanwhile, the history information 310 includes the apparatus ID 311, the occurrence date and time 312, and the incident content 313.

The registration unit 23 in the CPU 17 registers the generated history information 310 in a DB corresponding to the incident type in the history DB 31 (Step S13). Further, the normalization unit 24 in the CPU 17 normalizes the history information 310 in a certain format corresponding to the incident type and registered in the history DB 31 to the history information 310 of a predetermined format (Step S14). Furthermore, the recording unit 25 in the CPU 17 temporarily stores the normalized history information 310 in the RAM 15 (Step S15), and terminates the first pre-processing illustrated in FIG. 5. Furthermore, when not detecting an incident (Step S11: No), the detection unit 21 terminates the first pre-processing illustrated in FIG. 5.

In the first pre-processing, when detecting an incident that has occurred, the history information 310 in a certain format corresponding to the incident type is generated, and the history information is registered in a DB corresponding to the incident type in the history DB 31. Furthermore, in the first pre-processing, the history information in a format corresponding to the incident type is normalized to history information in a predetermined format. As a result, it is possible to organize the pre-processing before the history information is recorded in the blockchain 50.

### Recording process

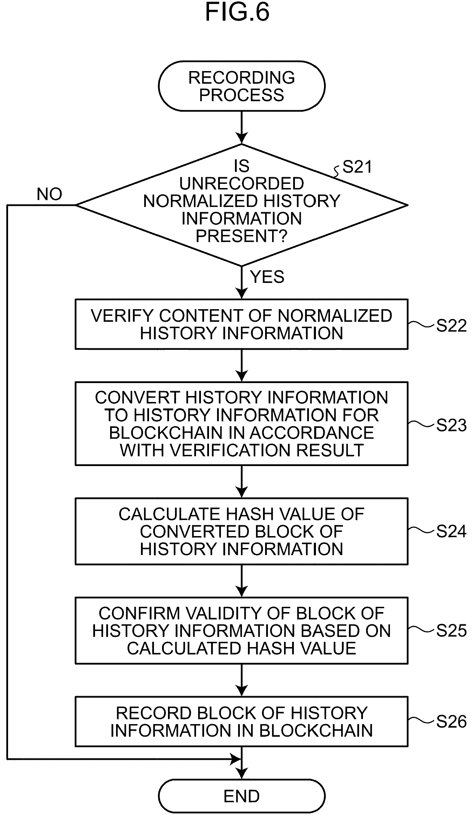

FIG. 6 is a flowchart illustrating an example of processing operation performed by the CPU 17 in relation to a recording process. The recording process is a process for recording normalized history information 310 in the blockchain 50. Meanwhile, for the sake of simplicity of explanation, an example will be described in which the CPU 17 in the operator terminal 3 performs the recording process, but the CPU 17 in the engineering terminal 2 and the CPU 46 in the controller 4 perform the same process when the normalized unrecorded history information 310 is present. As a method for detecting the normalized unrecorded history information 310, the unrecorded history information 310 is detected based on a determination result on whether or not the normalized history information 310 that is not recorded in the blockchain 50 is stored in the history DB 31A at Step S21 (to be described later).

As illustrated in FIG. 6, the recording unit 25 in the CPU 17 determines whether or not the normalized history information 310 that is not recorded in the blockchain 50 is present (Step S21). When the unrecorded normalized history information 310 is present (Step S21: Yes), the recording unit 25 verifies the content of the normalized history information 310 (Step S22). Meanwhile, the content of the normalized history information 310 is information, such as transaction, that can be verified by a third party and that is for autonomously proving validity of the history information.

The recording unit 25 converts the history information 310 to the history information 310 for the blockchain in accordance with a verification result indicating that the validity of the history information 310 is proved (Step S23). The recording unit 25 calculates a hash value of the converted block of the history information 310 (Step S24). The recording unit 25 confirms validity of the block of the history information 310 based on the calculated hash value (Step S25).

After confirming the validity of the block, the recording unit 25 records the block of the history information 310 in the blockchain 50 (Step S26), and terminates the recording process illustrated in FIG. 6. Further, when the normalized unrecorded history information 310 is not present (Step S21: No), the recording unit 25 terminates the recording process illustrated in FIG. 6.

In the recording process, when the normalized unrecorded history information 310 is present, the normalized unrecorded history information is converted to a block, and the block of the history information is recorded in the blockchain 50. As a result, it is possible to centrally manage the history information on incidents that are detected by each of the information processing apparatuses in the plant system 1.

Meanwhile, a timing of recording the normalized unrecorded history information 310 in the blockchain 50 is, for example, a timing after a lapse of a certain time since temporary storage of the normalized history information 310 in the RAM 15. Meanwhile, the timing is not limited to the above-described example, and may be, for example, a timing immediately after storage of the normalized history information 310 in the RAM 15, or, for example, a timing at which the number of pieces of the history information 310 stored in the RAM 15 exceeds a predetermined number. Furthermore, for example, it may be possible to record, in the blockchain 50, all pieces of the history information 310 stored in the RAM 15 at a timing at which occurrence of a certain important event is detected, and the timing may be appropriately changed.

### Operation of recording history information 310 in blockchain 50

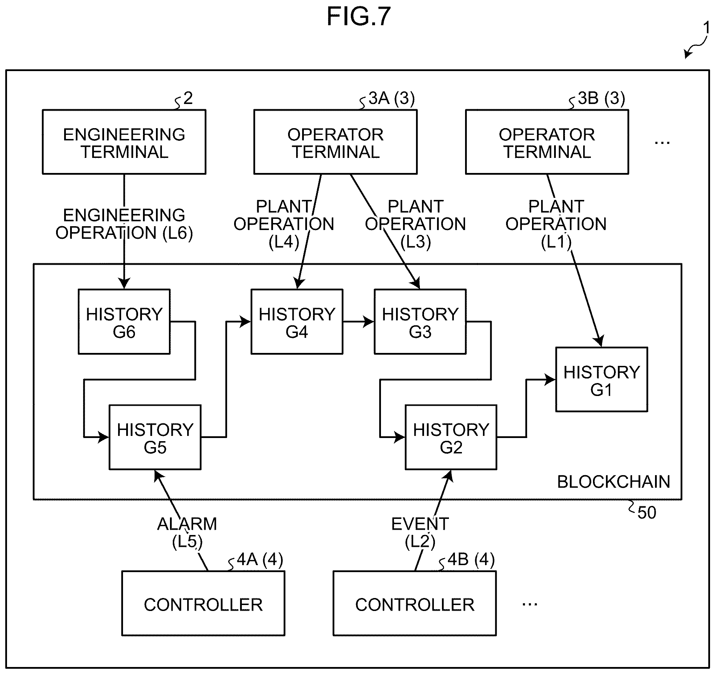

FIG. 7 is a schematic diagram illustrating an example of operation of recording the history information 310 in the blockchain 50. The operator terminal 3B detects an incident L1 of plant operation, generates history information G1 corresponding to an incident type of the incident L1, and registers the history information G1 in the history DB 31. Further, the controller 4B detects an incident L2 of an event, generates history information G2 corresponding to an incident type of the incident L2, and registers the history information G2 in the history DB 31A. Furthermore, the operator terminal 3A detects an incident L3 of plant operation, generates history information G3 corresponding to an incident type of the incident L3, and registers the history information G3 in the history DB 31.

Moreover, the operator terminal 3A detects an incident L4 of plant operation, generates history information G4 corresponding to an incident type of the incident L4, and registers the history information G4 in the history DB 31. Furthermore, the controller 4A detects an incident L5 of an alarm, generates history information G5 corresponding to an incident type of the incident L5, and registers the history information G5 in the history DB 31A. The engineering terminal 2 detects an incident L6 of engineering operation, generates history information G6 corresponding to an incident type of the incident L6, and registers the history information G6 in the history DB 31. For example, the incidents are detected in order of L1→L2→L3→L4→L5→ L6, and pieces of the history information corresponding to the respective incident types are generated.

The recording unit 25 of the operator terminal 3B records a block of the normalized history information G1 on the incident L1 in the blockchain 50. Further, the recording unit 25A of the controller 4B records a block of the normalized history information G2 on the incident L2 in the blockchain 50. Furthermore, the recording unit 25 of the operator terminal 3A records a block of the normalized history information G3 on the incident L3 in the blockchain 50.

Moreover, the recording unit 25 of the operator terminal 3A records a block of the normalized history information G4 on the incident L4 in the blockchain 50. Furthermore, the recording unit 25A of the controller 4A records a block of the normalized history information G5 on the incident L5 in the blockchain 50. Moreover, the recording unit 25 of the engineering terminal 2 records a block of the normalized history information G6 on the incident L6 in the blockchain 50. In other words, the history information on the incident that is generated by the subject apparatus is recorded in the blockchain 50 in which the pieces of history information on the incidents of the other information processing apparatuses belonging to the plant system 1 are recorded. As a result, in the blockchain 50, the history information 310 on the incidents that are detected by all of the information processing apparatuses in the plant system 1 is centrally managed.

### Effects of first embodiment

In the plant system 1 of the first embodiment, with a scheme of the blockchain 50, the history information 310 on the incidents that are detected by each of the information processing apparatuses in the plant system 1 is centrally managed. As a result, by centrally managing a series of incidents including different types that have occurred in the plant, it is possible to clarify correlations between all of the incidents in the plant system 1 and simplify a cause analysis when a problem occurs, so that it is possible to efficiently improve plant operation. In addition, any of users who have legitimate viewing permissions is allowed to view the history information 310 that is recorded in the blockchain 50, and the recorded history information 310 is less likely to be falsified. Therefore, when presenting a record related to plant operation to a public institution for audit or accreditation, it is possible to present the record as a reliable record.

In the plant system 1, the history information is recorded in the blockchain 50, and therefore can be referred to from an arbitrary terminal with a legitimate viewing permission on the network 5. Therefore, an arbitrary terminal is able to perform an analysis depending on objectives. Further, even when abnormality (suspension or the like) occurs in an arbitrary information processing apparatus that participates in distributed management of the blockchain 50, it is possible to continuously perform operation.

Meanwhile, the example has been described above in which when each of the information processing apparatuses in the plant system 1 of the first embodiment detects an incident, history information on the incident is recorded in the blockchain 50. However, it may be possible to acquire history information on each of information processing apparatuses from a storage apparatus that centrally manages incidents detected by the information processing apparatuses in each of the plant systems 1, and record the acquired history information in the blockchain 50, where appropriate changes may be made. For example, an information processing system includes a plurality of information processing apparatuses installed in a plant, and a storage apparatus that is connected to the plurality of information processing apparatuses. Each of the information processing apparatuses includes a first processor, and the first processor detects occurrence of an incident, generates the history information 310 on the detected incident, and transmits the generated history information 310 on the incident to the storage apparatus. The storage apparatus includes a second processor, and the second processor receives the history information 310 on the incident from each of the information processing apparatuses, and records the received history information 310 in the blockchain 50. In the information processing system, with the scheme of the blockchain 50, it is possible to centrally manage the history information 310 on incidents detected by each of the information processing apparatuses in the plant. As a result, by centrally managing a series of incidents including different types that have occurred in the plant, it is possible to clarify correlations between all of the incidents in the information processing system and simplify a cause analysis when a problem occurs, so that it is possible to efficiently improve plant operation. In addition, any of users who have legitimate viewing permissions is allowed to view the history information 310 that is recorded in the blockchain 50, and the recorded history information 310 is less likely to be falsified. Therefore, when presenting a record related to plant operation to a public institution for audit or accreditation, it is possible to present the record as a reliable record.

Meanwhile, the example has been described above in which, in the plant system 1 of the first embodiment, the history information on incidents detected by the information processing apparatuses belonging to the same plant system 1 is recorded in the blockchain 50. However, the technology is not limited to the single plant system 1, and it may be possible to record, in the single blockchain 50, pieces of history information on incidents detected by each of information processing apparatuses in a plurality of plant systems, which will be described below as a second embodiment.

### Second embodiment

### System configuration

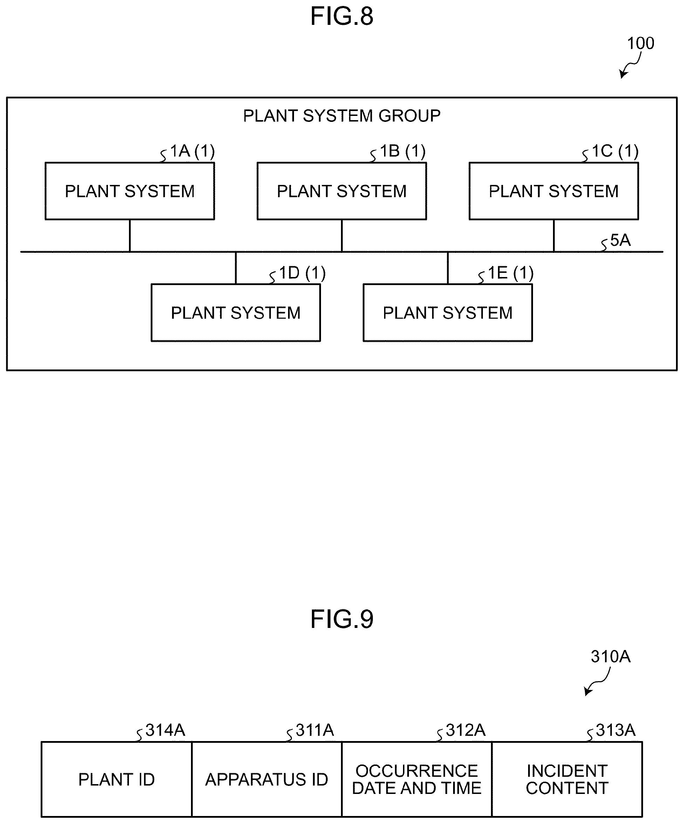

FIG. 8 is a block diagram illustrating an example of a plant system group 100 of the second embodiment. Meanwhile, for the sake of simplicity of explanation, the same components as those of the plant system 1 of the first embodiment will be denoted by the same reference symbols, and explanation of the same components and the same operation will be omitted. The plant system group 100 illustrated in FIG. 8 includes the plurality of plant systems 1 and the plurality of plant systems 1 are connected to one another by a network 5A.

The plant system group 100 includes, as the plurality of plant systems 1, a plant system 1A, a plant system 1B, a plant system 1C, a plant system 1D, and a plant system 1E, for example. Meanwhile, for the sake of simplicity of explanation, the example is illustrated in which the plant system group 100 includes the five plant systems 1, but appropriate changes may be made as long as the plant system group 100 includes at least two plant systems. The plant system group 100 is a system that records history information on incidents detected by information processing apparatuses in each of the plant systems 1, in a blockchain 50A that is shared by all of the information processing apparatuses in the plurality of plant systems 1 in the plant system group 100.

The blockchain 50A is a blockchain of a distributed ledger type for allowing the plurality of plant systems 1 to share pieces of history information on incidents that are detected by the information processing apparatuses, such as the engineering terminal 2, the operator terminal 3, and the controller 4, in each of the plant systems 1.

The generation unit 22 in the CPU 17 in each of the operator terminal 3 and the engineering terminal 2 and the generation unit 22A in the CPU 46 in the controller 4 in each of the plant systems 1, when detecting occurrence of an incident, generates history information 310A on the incident.

### History information

FIG. 9 is an explanatory diagram illustrating an example of the history information 310A. The history information 310A illustrated in FIG. 9 includes, for each plant ID 314A, an apparatus ID 311A, an occurrence date and time 312A, and an incident content 313A. The plant ID 314A is second identification information for identifying the plant system 1 to which an information processing apparatus that has detected an incident belongs. The apparatus ID 311A is first identification information for identifying the information processing apparatus that has detected the incident. The occurrence date and time 312A is a date and time at which the detection unit 21 (21A) detects the incident that has occurred. The incident content 313A is a specific content of the incident.

### Operation of plant system group 100

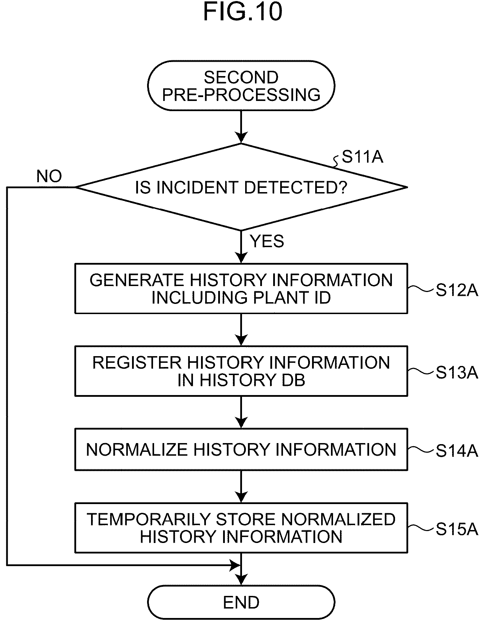

Operation of the plant system group 100 of the second embodiment will be described. FIG. 10 is a flowchart illustrating an example of processing operation performed by the CPU 17 in relation to second pre-processing. The second pre-processing is pre-processing for, when detecting occurrence of an incident, recording history information 310A on the incident in the blockchain 50A. Meanwhile, for the sake of simplicity of explanation, an example will be described in which the second pre-processing is performed by the CPU 17 in the operator terminal 3, but the CPU 17 in the engineering terminal 2 and the CPU 46 in the controller 4 perform the same process when detecting occurrence of an incident.

As illustrated in FIG. 10, the detection unit 21 in the CPU 17 in the operator terminal 3 determines whether or not an incident is detected (Step S11A). When detecting the incident (Step S11A: Yes), the generation unit 22 in the CPU 17 generates the history information 310A in a format corresponding to an incident type based on a detection result of the incident (Step S12A). Meanwhile, the history information 310A includes the plant ID 314A, the apparatus ID 311A, the occurrence date and time 312A, and the incident content 313A.

The registration unit 23 in the CPU 17 registers the generated history information 310A in a DB corresponding to the incident type in the history DB 31 (Step S13A). Further, the normalization unit 24 in the CPU 17 normalizes the history information 310A that is in the format corresponding to the incident type and that is registered in the history DB 31 to the history information 310A of a predetermined format (Step S14A). Furthermore, the recording unit 25 in the CPU 17 temporarily stores the normalized history information 310A in the RAM 15 (Step S15A), and terminates the second pre-processing illustrated in FIG. 10. Moreover, when not detecting an incident (Step S11A: No), the detection unit 21 terminates the second pre-processing illustrated in FIG. 10.

In the second pre-processing, when an incident that has occurred is detected, the history information 310A in a format corresponding to the incident type is generated, and the history information 310A including the plant ID 314A is registered in a DB corresponding to the incident type in the history DB 31. Furthermore, in the second pre-processing, the history information 310A in a format corresponding to the incident type is normalized to the history information 310A in a predetermined format. As a result, it is possible to organize the pre-processing before the history information 310A is recorded in the blockchain 50A.

### Operation of recording history information 310A in blockchain 50A

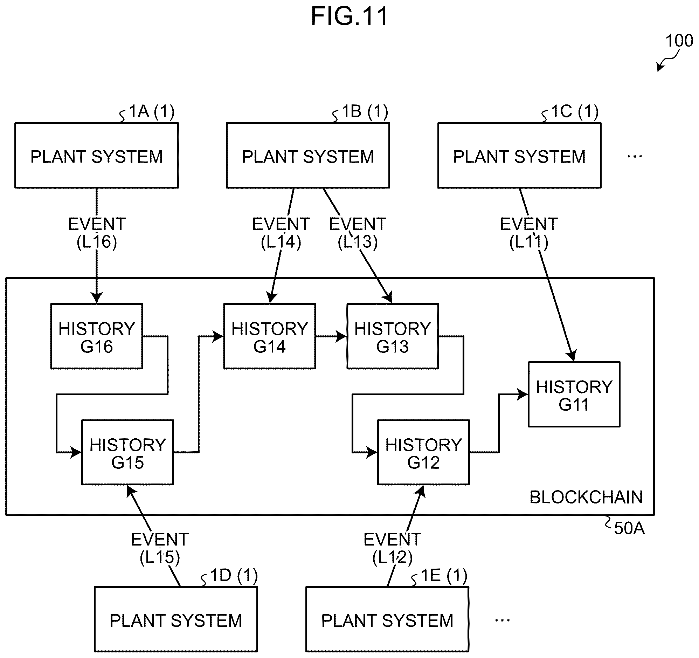

FIG. 11 is a schematic diagram illustrating an example of operation of recording the history information 310A in the blockchain 50A. An information processing apparatus in the plant system 1C detects an incident L11 of an event, generates history information G11 corresponding to an incident type of the incident L11, and registers the history information G11 in the history DB. An information processing apparatus in the plant system 1E detects an incident L12 of an event, generates history information G12 corresponding to an incident type of the incident L 12, and registers the history information G12 in the history DB. An information processing apparatus in the plant system 1B detects an incident L13 of an event, generates history information G13 corresponding to an incident type of the incident L13, and registers the history information G13 in the history DB.

Furthermore, the information processing apparatus in the plant system 1B detects an incident L14 of an event, generates history information G14 corresponding to an incident type of the incident L14, and registers the history information G14 in the history DB. An information processing apparatus in the plant system 1D detects an incident L15 of an event, generates history information G15 corresponding to an incident type of the incident L15, and registers the history information G15 in the history DB. An information processing apparatus in the plant system 1A detects an incident L16 of an event, generates history information G16 corresponding to an incident type of the incident, and registers the history information G16 in the history DB. For example, the incidents are detected in order of L11→L12→L13→L14→L15 →L16, and pieces of the history information corresponding to the respective incident types are generated.

An information processing apparatus in the plant system 1C records a block of the normalized history information G11 on the incident L11 in the blockchain 50A. An information processing apparatus in the plant system 1E records a block of the normalized history information G12 on the incident L12 in the blockchain 50A. An information processing apparatus in the plant system 1B records a block of the normalized history information G13 on the incident L13 in the blockchain 50A.

An information processing apparatus in the plant system 1B records a block of the normalized history information G14 on the incident L14 in the blockchain 50A. An information processing apparatus in the plant system 1D records a block of the normalized history information G15 on the incident L15 in the blockchain 50A. An information processing apparatus in the plant system 1A records a block of the normalized history information G16 on the incident L16 in the blockchain 50A. In other words, the information processing apparatus in the plant system 1A in the plant system group 100 records the history information on an incident of the subject apparatus in the blockchain 50A that records therein the history information on incidents of the different information processing apparatuses that belong to the plant system 1A or the plant systems 1B to 1E different from the plant system 1A. As a result, in the blockchain 50A, pieces of the history information on incidents that are detected by all of the information processing apparatuses in all of the plant systems 1 in the plant system group 100 are centrally managed.

### Effects of second embodiment

In the plant system group 100 of the second embodiment, the generated history information on an incident is recorded in the blockchain 50A that records therein pieces of history information on incidents of different information processing apparatuses that belong to each of the plant systems 1. In other words, with a scheme of the blockchain 50A, it is possible to centrally manage the history information 310A on incidents detected by each of the information processing apparatuses in all of the plant systems 1. As a result, by centrally managing a series of incidents including different types that have occurred in the plant system group 100, it is possible to clarify correlations between all of the incidents in the plant system group 100 and simplify a cause analysis when a problem occurs, so that it is possible to efficiently improve plant operation. In addition, any of users who have legitimate viewing permissions is allowed to view the history information 310A that is recorded in the blockchain 50A, and the recorded history information 310A is less likely to be falsified. Therefore, when presenting a record related to plant operation to a public institution for audit or accreditation, it is possible to present the record as a reliable record.

In the plant system group 100, the history information is recorded in the blockchain 50A, and therefore can be referred to from an arbitrary terminal with a legitimate viewing permission on the network 5A. Therefore, an arbitrary terminal is able to perform an analysis depending on objectives. Further, even when abnormality (suspension or the like) occurs in an arbitrary information processing apparatus that participates in distributed management of the blockchain 50A, it is possible to continuously perform operation.

In the plant system group 100, by analyzing correlations between operation histories and alarm histories of each of the plant systems 1, it is possible to perform analysis on all of the plants while seeing a big picture. As a result, from a difference in operation tendencies in the plant system 1 in which alarms are frequently issued and the plant system 1 in which alarms are not frequently issued, it is possible to improve plant operation. By analyzing correlations between operation records from alarm issuance to alarm release, it is possible to analyze optimal plant operation for alarm release, so that it is possible to improve plant operation. Furthermore, it is possible to centrally analyze incidents related to security threat that occurs in all of the plant systems 1, so that it is possible to analyze a regional or temporal tendency and take measures.

Meanwhile, the example has been described in which when each of the information processing apparatuses in the plant system group 100 of the second embodiment detects an incident, the history information on the incident is recorded in the blockchain 50A. However, it may be possible to acquire the history information on each of the information processing apparatuses from an apparatus that centrally manages the information processing apparatuses in the plant system 1, and record the acquired history information in the blockchain 50A, where appropriate changes may be made.

Meanwhile, a distance between the plant systems 1 in the plant system group 100 of the second embodiment may be a short distance or a long distance, or may be in the same facility, where appropriate changes may be made.

Moreover, all or an arbitrary part of various kinds of processing functions that are implemented by the apparatuses may be realized by a CPU or a program that is analyzed and executed by the CPU, or may be realized by hardware using wired logic.

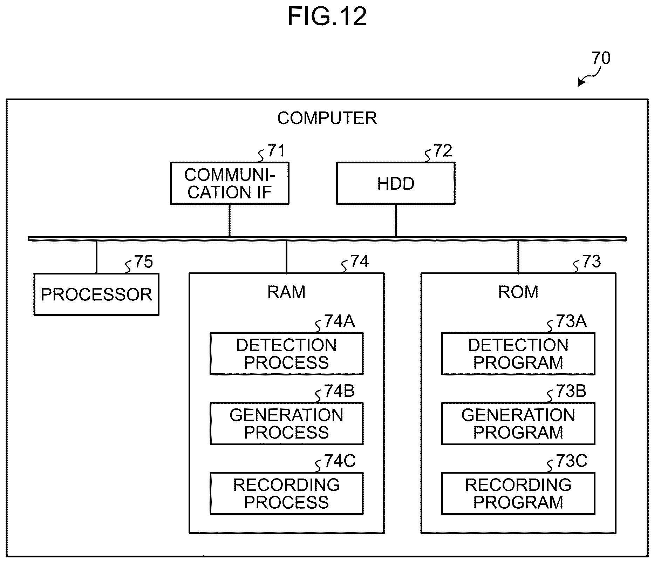

Meanwhile, various kinds of processes described in the embodiments are realized by causing an information processing apparatus 70 to execute a program that is prepared in advance. In the following, an example of the information processing apparatus 70 that executes a program having the same functions as those of the embodiments as described above will be described. FIG. 12 is an explanatory diagram illustrating an example of an information processing apparatus that executes a recording program.

The information processing apparatus 70 that executes the recording program illustrated in FIG. 12 includes a communication Interface (IF) 71, an HDD 72, a ROM 73, a RAM 74, and a processor 75.

The information processing apparatus 70 is, for example, a computer. Further, a recording program that implements the same functions as those of the above-described embodiments is stored in advance in the ROM 73. Meanwhile, it may be possible to record the recording program in a drive readable recording medium (not illustrated), instead of the ROM 73. Further, as the recording medium, it may be possible to adopt, for example, a portable recording medium, such as a Compact Disc (CD)-ROM, a Digital Versatile Disc (DVD), a Universal Serial Bus (USB) memory, or a Secure Digital (SD) card, or a semiconductor memory, such as a flash memory. Examples of the recording program include, as illustrated in FIG. 12, a detection program 73A, a generation program 73B, and a recording program 73C. Meanwhile, the detection program 73A, the generation program 73B, and the recording program 73C may be appropriately integrated or distributed.

Further, the processor 75 reads the programs 73A, 73B, and 73C from the ROM 73, load each of the read programs 73A, 73B, and 73C onto the RAM 74, and executes the programs 73A, 73B, and 73C. Furthermore, as illustrated in FIG. 12, the processor 75 functions as a detection process 74A, a generation process 74B, and a recording process 74C by executing each of the programs 73A, 73B, and 73C on the RAM 74.

The processor 75 detects an incident that has occurred. The processor 75 generates history information on the detected incident. The processor 75 records the generated history information in the blockchain. As a result, it is possible to enhance security while centrally managing a history of incidents that have occurred.

According to an aspect of one embodiment, it is possible to enhance security while centrally managing a history of incidents that have occurred.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An information processing apparatus (2,3,4) comprising:
a processor (17,46) configured to:
detect an incident that has occurred,
generate history information on the detected incident, and
record the generated history information in a blockchain (50).

2. The information processing apparatus according to claim 1, wherein the processor (17,46) is further configured to detect the incident of a different incident type.

3. The information processing apparatus according to claim 2, wherein the processor (17,46) is further configured to:
generate history information on the incident by using a first format that differs for each of the incident types,
normalize the generated history information to history information in a second format, and
record the normalized history information in the blockchain.

4. The information processing apparatus according to any one of claims 1 to 3, wherein the processor (17,46) is further configured to:
store the generated history information on the incident, and
after storing the generated history information on the incident, record the stored history information in the blockchain.

5. The information processing apparatus according to claim 4, wherein the processor (17,46) is further configured to record the stored history information in the blockchain after a lapse of a predetermined time since storage of the generated history information on the incident.

6. The information processing apparatus according to claim 4, wherein the processor (17,46) is further configured to store the generated history information on the incident, and thereafter record the stored history information in the blockchain at timing of detection of a predetermined incident.

7. The information processing apparatus according to any one of claims 1 to 3, wherein the processor (17,46) is further configured to generate the history information that includes identification information for identifying a subject apparatus, occurrence date and time of the incident, and a content of the incident.

8. The information processing apparatus according to any one of claims 1 to 3, wherein
the information processing apparatus belongs to a plant, and
the processor (17,46) is further configured to record the history information on an incident of a subject apparatus in the blockchain in which the history information on an incident of a different information processing apparatus belonging to the plant is recorded.

9. The information processing apparatus according to any one of claims 1 to 3, wherein
the information processing apparatus belongs to a first plant, and
the processor (17,46) is further configured to record the history information on an incident of a subject apparatus in the blockchain in which the history information on an incident of a different information processing apparatus belonging to one of the first plant and a second plant different from the first plant is recorded.

10. The information processing apparatus according to claim 9, wherein the processor (17,46) is further configured to generate the history information that includes first identification information for identifying the subject apparatus, occurrence date and time of the incident, a content of the incident, and second identification information for identifying a plant to which the subject apparatus belongs.

11. A plant system (1) comprising:
a plurality of information processing apparatuses (2,3,4) installed in a plant, wherein
each of the information processing apparatuses includes a processor (17,46) configured to:
detect an incident that has occurred,
generate history information on the detected incident, and
record the generated history information in a blockchain (50).

12. The plant system according to claim 11, wherein the processor (17,46) is further configured to detect the incident of a different incident type.

13. The plant system according to claim 12, wherein the processor (17,46) is further configured to:
generate history information on the incident by using a different format for each of the incident types,
normalize the generated history information to history information in a predetermined format, and
record the normalized history information in the blockchain.

14. The plant system according to any one of claims 11 to 13, wherein the processor (17,46) is further configured to generate the history information that includes identification information for identifying a subject apparatus, occurrence date and time of the incident, and a content of the incident.

15. The plant system according to any one of claims 11 to 13, wherein
each of information processing apparatuses belongs to a plant, and
the processor (17,46) is further configured to record the history information generated by the information processing apparatus in the blockchain in which the history information on an incident of a different information processing apparatus belonging to the plant is recorded.

16. The plant system according to any one of claims 11 to 13, wherein
a part of the information processing apparatus belongs to a first plant among the plurality of plants, and
the processor (17,46) is further configured to record the history information that is generated by an information processing apparatus belonging to the first plant in the blockchain in which the history information on an incident of a different information processing apparatus that belongs to one of the first plant and a second plant different from the first plant is recorded.

17. The plant system according to claim 16, wherein the processor (17,46) is further configured to generate the history information that includes first identification information for identifying an information processing apparatus that has detected the incident, occurrence date and time of the incident, a content of the incident, and second identification information for identifying a plant to which the information processing apparatus that has detected the incident belongs.

18. A recording method carried out by a computer (70), the recording method comprising:
detecting an incident that has occurred;
generating history information on the detected incident; and
recording the generated history information in a blockchain (50).

19. A recording program that causes a computer (70) to execute a process (74A,74B,74C), the process comprising:
detecting an incident that has occurred;
generating history information on the detected incident; and
recording the generated history information in a blockchain (50).

20. An information processing system (1) comprising:
a plurality of information processing apparatuses (2,3,4) that are installed in a plant; and
a storge apparatus that is connected to the plurality of information processing apparatuses, wherein
each of the information processing apparatuses includes a first processor (17,46) configured to:
detect an incident that has occurred,
generate history information on the detected incident, and
transmit the generated history information on the incident to the storage apparatus, and
the storage apparatus includes a second processor configured to:
receive the history information on the incident from each of the information processing apparatuses, and
record the received history information in a blockchain (50).
